Europäisches Patentamt

European Patent Office

Office européen des brevets

(11) Veröffentlichungsnummer: **0 263 416 B1**

(12) **EUROPÄISCHE PATENTSCHRIFT**

(45) Veröffentlichungstag der Patentschrift: **11.09.91**

(51) Int. Cl.5: **H04M 19/08**

(21) Anmeldenummer: **87114206.3**

(22) Anmeldetag: **29.09.87**

(54) **Elektronische Sprechschaltungsanordnung.**

(30) Priorität: **30.09.86 DE 3633234**

(43) Veröffentlichungstag der Anmeldung:
**13.04.88 Patentblatt 88/15**

(45) Bekanntmachung des Hinweises auf die
Patenterteilung:
**11.09.91 Patentblatt 91/37**

(84) Benannte Vertragsstaaten:
**DE FR GB IT NL SE**

(56) Entgegenhaltungen:
**EP-A- 0 146 183**
**EP-A- 0 154 366**
**DE-A- 3 337 393**
**DE-A- 3 505 634**

**PHILIPS-SPEZIFIKATION TEA 1060, TEA 1061,
August 1983, Seiten 393-406; "Versatile telephone transmission circuits with dialler interface"**

(73) Patentinhaber: **Siemens Aktiengesellschaft**
**Wittelsbacherplatz 2**
**W-8000 München 2(DE)**

(72) Erfinder: **Doll, Armin, Dipl.-Ing.**
**St.-Veit-Strasse 28**
**W-8000 München 80(DE)**
Erfinder: **Navratil, Emil, Dr.**
**Wemdinger Strasse 38**
**W-8000 München 80(DE)**

## Beschreibung

Die Erfindung betrifft eine Sprechschaltungsanordnung nach dem Oberbegriff des Patentanspruchs 1.

Eine derartige Sprechschaltungsanordnung ist aus der Philips-Spezifikation TEA 1060, TEA 1061: "Versatile Telephone Transmission Circuits With Dialler Interface", Juli 1983 bekannt.

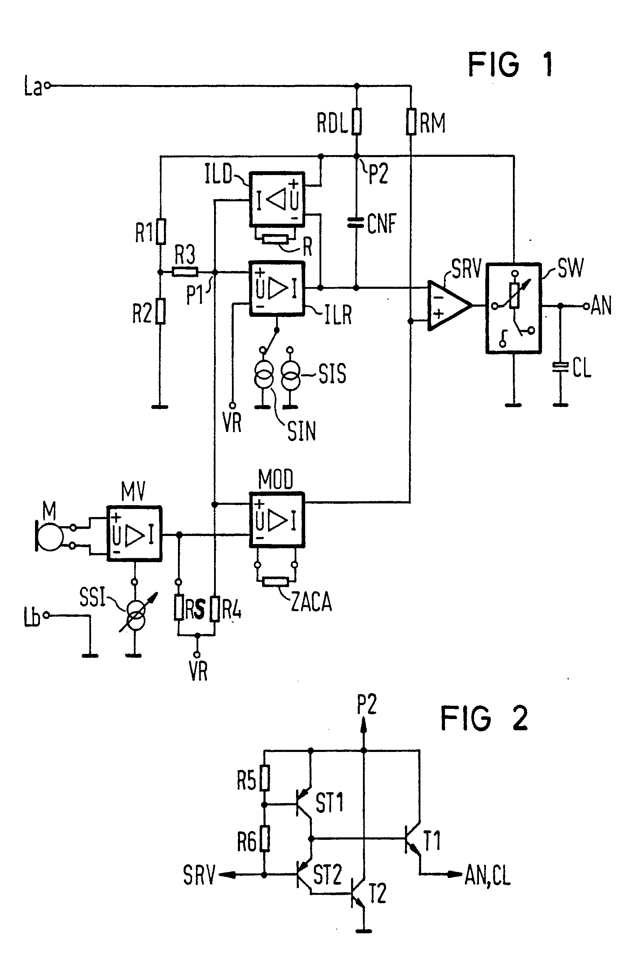

In den Fig. 1 und 3 der vorgenannten Spezifikation ist eine gattungsgemäße Sprechschaltungsanordnung angegeben, die einen integrierten Schaltkreis enthält. Der integrierte Schaltkreis und externe Baugruppen, z.B. Wähl- oder Kontrollschaltkreise, werden über die Telefonleitung versorgt, wobei der integrierte Schaltkreis seine eigene Spannungsversorgung erzeugt, die aber abhängig von der externen Belastung ist. Diese eigene Versorgungsspannung wird auch zur Versorgung der externen Baugruppen eingesetzt. Zur Entkopplung dient eine an die Ausgangsklemmen zum Anschluß der externen Baugruppen geschaltete Pufferkapazität.

Der Spannungsabfall über einer Entkopplungskapazität, bezogen auf den Widerstand R9, und der um 0,5 mA erhöhte Strom $I_{CC}$, den der integrierte Schaltkreis selber verbraucht, bestimmen den Leitungsstrom, der durch den Transistor fließt, der dem schnellen Regelverstärker nachgeschaltet ist. Gemäß Fig. 3 der vorgenannten Veröffentlichung liegt zwischen der Leitungsklemme LN und der Klemme $V_{CC}$ für die interne und externe Spannungsversorgung ein Widerstand R1 von 600 Ohm, der dem AC-Innenwiderstand der Sprechschaltung entspricht, die Pufferkapazität C1 speist und zusammen mit dieser einen Tiefpaß bildet.

In der vorgenannten Schaltungsanordnung erzeugt die DC-Teilschaltung eine Versorgungsspannung für den integrierten Schaltkreis und die extern angeschlossene Pufferkapazität und erzeugt eine DC-Strom-/Spannungs-Kennlinie. Die AC-Teilschaltung mit einer Modulatorschaltung zur Erzeugung eines Leitungs-Sendestroms ist mit der DC-Teilschaltung verkoppelt, nicht aber die Bildung der AC-Impedanz. Die DC-Teilschaltung und die Modulatorschaltung steuern den schnellen Regelverstärker und damit den Leitungsstrom.

Der Stromfühlerwiderstand R9, der den Leitungsstrom wesentlich mitbestimmt, stellt gemäß der Fig. 3 der vorgenannten Spezifikation einen relativ kleinen differentiellen DC-Widerstand dar. Der Widerstand R1, der gleich dem AC-Innenwiderstand der Sprechschaltungsanordnung ist, liegt nicht im Regelkreis der Anordnung, d.h. nicht im Regelkreis der DC-Teilschaltung. An ihm wird ein Spannungsabfall erzeugt, durch den die Spannungsversorgung der externen Baugruppen verschlechtert wird.

Auch eine parallel zu R1 liegende (elektronische) Drossel zur Erhöhung des Stroms für die externe Last ermöglicht keine Rückwirkungsfreiheit auf die Sprechschaltung selbst. Somit ist bei der bekannten Schaltung eine geregelte DC-Strom-Spannungskennlinie und ein höherer differentieller Widerstand als R9 nicht gegeben bzw. möglich.

Zudem ist aus der DE-A-3 505 634 eine Schaltungsanordnung zur Speisung von Zusatzeinrichtungen eines Fernsprechapparates aus dem Schleifenstrom der Teilnehmeranschlußleitung bekannt. Zwischen die Sprechadern ist dabei eine die Leitungsspannung begrenzende gegengekoppelte Verstärkerstufe mit einer komplementären Darlington-Schaltung geschaltet, dessen emitterseitiger Transistor ein Mehrfachkollektor-Transistor mit drei Kollektoren ist. Ein Kollektor steuert einen Speisetransistor für eine vorrangige Stromversorgungseinrichtung, ein zweiter Kollektor einen Speisetransistor für die Stromversorgungseinrichtung einer Zusatzeinrichtung, die beispielsweise ein Lauthörverstärker sein kann. Der dritte Kollektor des Mehrfachkollektor-Transistors speist einen Belastungstransistor, der überschüssigen Schleifstrom ableitet oder bei die vorgesehene Spannung der Stromversorgungseinrichtung unterschreitender Wechselspannungsamplitude den Schleifstrom zur Verbesserung des Querfaktors ableitet.

Schließlich ist in der DE-A-3 337 393 ein Verfahren und eine Schaltungsanordnung zur Erzeugung einer Betriebsspannung in einer über eine Fernmeldeleitung ferngespeisten Teilnehmereinrichtung beschrieben. Um bei ferngespeisten Teilnehmereinrichtungen einen möglichst niedrigen Gleichstrom-Eingangswiderstand zu erreichen, ist in der Teilnehmereinrichtung eine Regelschaltung mit einer spannungsgesteuerten Spannungsquelle vorgesehen, deren Arbeitspunkt so festgelegt ist, daß bei unterschiedlichen Schleifengleichströmen und unterschiedlichen Amplituden von Sende- und Empfangssignal der Aussteuerbereich eines in der spannungsgesteuerten Spannungsquelle angeordneten Transistors nicht überschritten wird. Um eine möglichst hohe Betriebsspannung bei ausreichendem Aussteuerbereich zu erreichen, ändert die Regelschaltung den Spannungsabfall an der spannungsgesteuerten Spannungsquelle in Abhängigkeit von dem auf der Fernmeldeleitung augenblicklich fließenden Schleifengleichstrom.

Der Erfindung liegt die Aufgabe zugrunde, eine Sprechschaltungsanordnung mit definiertem differentiellen Widerstand und starrer DC-Strom-/Spannungskennlinie anzugeben, die über Ausgangsklemmen eine rückwirkungsfreie gepufferte Versorgungsspannung für externe Baugruppen zur Verfügung stellt und die eine optimale Ausnutzung des zur Verfügung stehenden Leitungsstroms ermöglicht, so daß auch bei geringen Leitungsströmen, d.h. DC- und AC-Strömen, noch ein möglichst großer Strom für die Versorgung der externen Last zur Verfügung steht.

Diese Aufgabe wird bei einer Schaltungsanordnung der eingangs genannten Art erfindungsgemäß durch die Merkmale des kennzeichnenden Teils des Patentanspruchs 1 gelöst.

Die erfindungsgemäße Schaltungsanordnung besitzt den Vorteil, daß die DC-Teilschaltung eine starre Strom-/Spannungskennlinie mit definiertem differentiellen Widerstand erzeugt und mit der AC-Teilschaltung sowie dem schnellen Regelverstärker und der Stromwippenschaltung in dessen Ausgangskreis eine Stromsenke bildet, bei der der vorgegebene Sollstrom nach Möglichkeit in die Pufferkapazität fließt und unabhängig von der externen Last ist. Der AC-Strom, der infolge des Innenwiderstands der Sprechschaltungsanordnung fließt, sowie der AC-Sendemodulationsstrom bzw. das Mikrofonsignal und das Leitungssignal werden ebenfalls in den Regelkreis der Stromsenke einbezogen und bestimmen den Momentansollstrom mit. Somit erreicht man eine hohe Stromausnutzung hinsichtlich der Sprechschaltungsanordnung und der Versorgung der externen Last.

Weitere Ausgestaltungen des Erfindungsgedankens sind in Unteransprüchen gekennzeichnet.

Die Erfindung wird im folgenden anhand von in den Figuren der Zeichnung dargestellten Ausführungsbeispielen näher erläutert.

Es zeigt:

Fig. 1    ein schematisches Schaltbild einer erfindungsgemäßen elektronischen Sprechschaltungsanordnung und

Fig. 2    ein Schaltbild einer konkreten Ausführungsform der stromwippenschaltung nach Fig. 1.

Gemäß Fig. 1 ist die erfindungsgemäße elektronische Sprechschaltungsanordnung über zwei Leitungsklemmen La und Lb mit der Telefonleitung verbunden, die durch die nicht gezeichneten Ersatzelemente einer amtsseitigen Speisespannungsquelle mit Innenwiderstand und einem Leitungswiderstand dargestellt werden kann. Die zweite Leitungsklemme Lb ist mit Bezugspotential verbunden. Die erste Leitungsklemme La ist über den Stromfühlerwiderstand RDL für den Leitungsstrom mit einem Speiseknotenpunkt P2 verbunden. Von diesem Speiseknotenpunkt P2 ist ein aus den Widerständen R1 und R2 gebildeter ohmscher Spannungsteiler gegen das Bezugspotential geschaltet. Vom Knotenpunkt P2 wird andererseits die Stromwippenschaltung SW gespeist. Schließlich ist der Knotenpunkt P2 über eine Entkopplungskapazität CNF einerseits mit dem invertierenden Eingang eines schnellen Regelverstärkers SRV und andererseits mit dem Ausgang eines DC-Leitungsstromreglers ILR verbunden. Ein DC-Leitungsstromdetektor ILD greift eingangsseitig die Spannung über der Entkopplungskapazität CNF ab, d.h. ein Eingang des DC-Leitungsstromdetektors ILD liegt ebenfalls am Knotenpunkt P2. Ausgangsseitig steuert der Leitungsstromdetektor ILD einen AC-Knotenpunkt P1.

Dieser Knotenpunkt P1 ist einerseits über einen Widerstand R3 mit dem Verbindungspunkt der beiden Widerstände R1 und R2, zweitens mit einem Eingang des Leitungsstromreglers ILR, drittens mit einem Eingang eines Modulators MOD und schließlich über einen Widerstand R4 mit einer Klemme VR verbunden, an der ein Referenzpotential liegt. Der zweite Eingang des DC-Leitungsstromreglers ILR liegt direkt an der Klemme mit dem Referenzpotential.

Der Modulator MOD ist Teil der AC-Teilschaltung zur Erzeugung eines Leitungs-Sendestroms. Während ein Eingang des Modulators MOD mit dem AC-Knotenpunkt P1 verbunden ist, liegt der andere Eingang einerseits über einen Widerstand RS an der Klemme VR mit dem Referenzpotential und andererseits am Ausgang eines Mikrofon-Vorverstärkers MV, an dessen Eingangsklemmen extern ein Mikrofon M angeschlossen ist. Vorzugsweise ist der Mikrofon-Vorverstärker MV in seiner Verstärkung steuerbar. Ein Ausgang des Modulators MOD ist einerseits an den nicht invertierenden Eingang des schnellen Regelverstärkers SRV und andererseits über den Modulationswiderstand RM an die erste Leitungsklemme La angeschlossen.

Der Ausgang des schnellen Regelverstärkers SRV steuert einen Eingang der Stromwippenschaltung SW, die gemäß Fig. 1 vereinfacht als gesteuerter Widerstand mit Schalter dargestellt ist. Ein Ausgang der Stromwippenschaltung SW ist mit dem Bezugspotential, der andere mit einer Klemme AN zum Anschluß einer externen Last verbunden, von der gegen das Bezugspotential eine Pufferkapazität CL für die Last geschaltet ist.

Gemäß Fig. 1 sind der DC-Leitungsstromdetektor ILD, der DC-Leitungsstromregler ILR, der Modulator MOD und der M Mikrofon-Vorverstärker MV jeweils ein Transkonduktanzverstärker bzw. ein Spannungs-Strom-Wandler mit fest eingestellter oder mit variabler Steilheit.

So besitzt der DC-Leitungsstromdetektor ILD die fest eingestellte, etwa dem Kehrwert des symbolisch eingezeichneten Widerstands R entsprechende Steilheit, der Modulator MOD die fest eingestellte, etwa dem Kehrwert des extern anschließberen symbolisch eingezeichneten Widerstands ZACA entsprechende Steilheit, wobei der Widerstand ZACA im Ausführungsbeispiel der AC-Impedanz der Sprechschaltungsanordnung entspricht.

Die Steilheit des Mikrofon-Vorverstärkers MV ist mit Hilfe der steuerbaren Stromquelle SSI variabel und steuerbar. Dabei liegt die Stromquelle SSI zwischen einer externen oder internen Klemme und dem Bezugspotential. Die Stromquelle SSI ist beispielsweise von einem Signal steuerbar, das von den Strom- oder Spannungswerten sowie den Grenzwerten für Unter-bzw. Übersteuerung der Schaltungsanordnung abhängt.

Der Leitungsstromregler ILR ist über einen Schalter zwischen zwei am freien Ende mit dem Bezugspotential verbundenen Stromquellen SIN und SIS umschaltbar, wobei diese gegebenenfalls gesteuerten Stromquellen unterschiedliche variable Steilheiten symbolisieren, so daß je nach Schalterstellung entweder eine normale Steilheit für Normalbetrieb oder eine hohe Steilheit insbesondere für Einschwingvorgänge ermöglicht wird. Somit läßt sich die Zeitkonstante für das DC-AS-Trennglied mit der Entkopplungskapazität CNF über die Steilheit des Reglers ILR steuern.

Der zwischen dem Ausgangs des Mikrofon-Vorverstärkers MV und der Klemme VR mit dem Referenzpotential liegende Widerstand RS ist vorzugsweise über eine Klemme extern anzuschließen und beeinflußt wesentlich die Verstärkung des Mikrofonverstärkers MV den Frequenzgang. Damit wird der Mikrofon-Vorverstärker MV an den Eingang des nachfolgenden Modulators MOD angepaßt.

Die erfindungsgemäße Schaltungsanordnung gemäß Fig. 1 arbeitet folgendermaßen: Zunächst sei angenommen, daß die Gabel des die Sprechschaltungsanordnung enthaltenden Telefonapparates gedrückt ist und der Stromfluß unterbrochen ist. Mit Öffnen der Gabel wird der Stromkreis geschlossen, wobei zunächst kein Strom fließen soll.

Die Schaltungsanordnung bringt zwei Regelkreise zum Eingriff: zum einen eine (schnelle) Regelung des Leitungsstroms in Abhängigkeit von der Spannung an der Entkopplungskapazität CNF und zum anderen die geregelte (langsame) Auf- oder Ent-ladung von CNF mit Hilfe des ohmschen Spannungsteilers aus den Winderstanden R1 bis R3 sowie des DC-Leitungsstromdetektors ILD und des DC-Leitungsstromreglers ILR.

Beim Einschalten erhält der Knotenpunkt P1 über die Widerstände R1 bis R3 ein positives Potential. Der DC-Leitungsstromdetektor ILD detektiert keine Spannung über der Entkopplungskapazität CNF und verschiebt das Potential von P1 nicht, so daß der DC-Leitungsstromregler ILR im Sinne einer Aufladung von CNF mit vergleichsweise hohem Strom eingreift. Die entstehende Spannung an CNF bewirkt über den schnellen Regelverstärker SRV einen DC-Leitungsstrom. Ausgangsseitig fließt dann in den DC-Leitungsstromdetektor ILD ein der eingangsseitigen Spannungsdifferenz entsprechender Strom, der zu einer Verringerung des Potentials am Knotenpunkt P1 führt. Die dann verringerte Spannungsdifferenz am Eingang des DC-Leitungsstromreglers ILR führt zu einem geringeren Ausgangsstrom des Leitungsstromreglers.

Der Ladevorgang für die Entkopplungskapazität CNF ist dann beendet, wenn der tatsächliche DC-Leitungsstrom dem eingestellten Strom der Strom-/Spannungs-Kennlinie entspricht. Diese Einstellung erfolgt über die Dimensionierung des ohmschen Spannungsteilers aus R1 bis R3, die Steilheit des DC-Leitungsstromdetektors ILD und den Wert des Stromfühlerwiderstands RDL.

Eine Änderung der DC-Spannung führt somit immer über den Leitungsstromdetektor und den Leitungsstromregler zu einer Auf-oder Entladung der Entkopplungskapazität CNF, die erst beendet ist, wenn das Potential des Knotenpunktes P1 sich wieder auf Referenzpotential befindet. Das ist dann der Fall, wenn der DC-Leitungsstrom dem DC-Strom des Leitungsstromdetektors entspricht. Der Wert der Entkopplungskapazität CNF ist dabei so groß gewählt, daß die Kapazität die AC-Teilschaltung von der DC-Teilschaltung entkoppelt, d.h. für AC-Ströme in guter Näherung einen Kurzschluß darstellt.

Das Verhalten des DC-Regelkreises ist mit Hilfe der umschaltbaren Stromquellen SIN und SIS, die die Steilheit des DC-Leitungsstromreglers ILR bestimmen, zwischen einem Normalbetrieb und einem Betrieb mit sprunghaften DC-Änderungen optimal einzustellen. Trotz des relativ hohen differentiellen Widerstandes, der durch die DC-Spannungs-Strom-Kennlinie gegeben ist, kann der Stromfühlerwiderstand RDL gegenüber vergleichbaren Schaltungsanordnungen nach dem Stand der Technik um etwa den Faktor 10 kleiner gewählt werden, so daß über dem Widerstand RDL gleichzeitig nur ein kleiner Spannungsabfall entsteht.

Beim Empfang einer AC-Leitungsspannung greift die DC-Regelung nicht ein und am Knotenpunkt P1 bzw. am "+"-Eingang des Modulators MOD liegt eine der AC-Leitungsspannung proportionale AC-Spannung, die über den Modulator MOD mit der der reziproken AC-Impedanz ZACA des Schaltungsanordnung entsprechenden Steilheit in einen modulierten Ausgangsstrom umgeformt wird, der über den Modulationswiderstand RM bzw. den schnellen Regelverstärker SRV auf die Telefonleitung rückwirkt. Entsprechend, nur mit umgekehrten Verhältnissen an den Eingängen des Modulators MOD, verhält sich die AC-Teilschaltung, wenn über das Mikrofon M und den Mikrofon-Vorverstärker MV ein Leitungs-Sendesignal erzeugt wird. Der modulierte Ausgangsstrom des Modulators MOD, der natürlich ein modulierter DC-Strom bzw. ein modulierter Sende-Biasstrom sein kann, wird über den Modulationswiderstand RM auf die Telefonleitung gegeben, bzw. über den schnellen Regelverstärker SRV und den Stromfühlerwiderstand RDL auf den anderen Modulatoreingang bzw. den anderen Eingang des schnellen Regelverstärkers SRV rückgekoppelt. In beiden Fällen, als beim Empfang eines Signals und beim Aussenden eines Signals ist somit der Innenwiderstand der Sprechschaltungsanordnung in den Regelkreis einbezogen.

Der schnelle Regelverstärker SRV ist über seine beiden Eingänge sowohl mit der DC- als auch mit der AC-Teilschaltung verknüpft und liefert immer dann ein Ausgangssignal, wenn eine Spannungsdifferenz zwischen seinen beiden Eingängen besteht. Dabei steuert der Ausgang des schnellen Regelverstärkers SRV die Stromwippe SW derart, daß der vorgegebene Sollstrom nach Möglichkeit in die Pufferkapazität CL fließt oder, falls dies wegen zu geringer Leitungsspannung nicht möglich ist, direkt zum Bezugspotential geleitet wird.

Der vorgegebene Sollstrom ist dabei unabhängig von der Last, die zwischen die Klemme AN und das Bezugspotential geschaltet wird. Dies garantiert eine starre DC-Spannungs-Strom-Kennlinie.

Das Einbeziehen des vom DC- und AC-Strom gesteuerten schnellen Regelverstärkers SRV über die Stromwippenschaltung SW, die den Speiseknotenpunkt P2 beeinflußt, in die als geregelte Stromsenke ausgebildete erfindungsgemäße Sprechschaltungsanordnung erlaubt die optimale Ausnutzung des zur Verfügung stehenden Leitungsstromes, so daß bei geringen Leitungsströmen ein möglichst großer Anteil zur Versorgung der externen Last zur Verfügung steht, wozu sowohl der DC- als auch AC-Strom ausgenutzt wird.

Wesentlich ist immer, daß die Eingänge des schnellen Regelverstärkers SRV über den Modulationswiderstand RM und die Entkopplungskapazität CNF mit den Anschlüssen des Stromfühlerwiderstands RDL verbunden sind.

Erfindungsgemäß kann der Stromfühlerwiderstand RDL auch mit der Leitungsklemme Lb verbunden sein, d.h. im Masseleitungsweg liegen. Lb ist dann über RDL am Bezugspotential bzw. Masse angeschlossen. Der eine Eingang des schnellen Regelverstärkers SRV liegt beispielsweise an einem Speiseknotenpunkt mit Bezugspotential bzw. Masse und der andere Eingang ist über die Serienschaltung aus Modulationswiderstand RM und Entkopplungskapazität an die Leitungsklemme Lb angeschlossen.

Gemäß dem Ausführungsbeispiel nach Fig. 2 enthält die Stromwippenschaltung SW zwei Schalttransistoren vom npn-Typ, die mit je einem Ausgangsanschluß, nämlich dem Kollektor, am Speiseknotenpunkt P2 und mit ihrem Emitter an einem Anschluß der Pufferkapazität CL sowie an der Ausgangsklemme AN bzw. am Bezugspotential angeschlossen sind.

Eingangsseitig werden die Schalttransistoren T1 und T2 von zwei Steuertransistoren ST1 ST2 gesteuert, die mit ihren Ausgangskreisen in Reihe liegen, wobei der Emitter des Transistors ST1 am Steuerknotenpunkt P2 und der Kollektor des Transistors ST2 an der Basis von T2 liegt. Der Verbindungspunkt der Ausgangskreise der beiden Steuertransistoren ST1 und ST2 führt auf die Basis des Schalttransistors T1. Zwischen dem Speiseknotenpunkt P2 und der Basis des Steuertransistors ST2 liegt ein aus den ohmschen Widerständen R5 und R6 gebildeter Spannungsteiler, dessen Teilerpunkt die Basis des Steuertransistors ST1 ansteuert. Die Basis des Steuertransistors ST2 bzw. der zugeordnete Anschluß des Widerstandes R6 sind mit dem Ausgang des schnellen Regelverstärkers SRV verbunden. R6 ist wertmäßig etwa eine Größenordnung kleiner als R5, z.B. 1 kΩ zu 10 kΩ.

Die Stromwippenschaltung SW gemäß Fig. 2 funktioniert folgendermaßen: Bei genügend hoher Spannungsdifferenz zwischen der Lastkapazität CL bzw. der Ausgangsklemme AN und der ersten Leitungsklemme La fließt der Strom über den vom Steuerstransistor ST1 angesteuerten Transistor T1 in die Pufferkapazität CL. Sind andererseits die Leitungsspannungen relativ zum Potential an der Klemme AN so tief, daß der Steuertransistor ST1 in Sättigung kommt, so wird der Steuertransistor ST1 und damit der Schalttransistor T2 leitend und der Strom fließt nach Masse ab.

Aufgrund der Entkopplung der Pufferkapazität CL bzw. der Ausgangsklemme AN von der Sprechschaltungsanordnung mit Hilfe des Transistors T1 bleibt bei niedriger momentanen Leitungsspannung oder beim Abschalten der Sprechschaltungsanordnung die Ladung in der Pufferkapazität, abgesehen von üblichen physikalischen Verlusten, weitgehend erhalten. An der Klemme AN ergibt sich somit ein Potential, das gegenüber dem Potential der ersten Leitungsklemme La um den Spannungsabfall am Stromfühlerwiderstand RDL, die Sättigungsspannung am Steuertransistor ST1 und um die Schwellenspannung des Schalttransistors T1 niedriger liegt.

## Patentansprüche

1. Elektronische Sprechschaltungsanordnung, die über eine erste und zweite Leitungsklemme (La/Lb) an eine Telefonleitung anschließbar ist, mit einer AC-Teilschaltung (MOD, RM, RDL, R1 bis R4) aus einer Modulatorschaltung (MOD) zur Erzeugung eines Leitungs-Sendestroms, mit einer DC-Teilschaltung (RDL, CNF, ILD, R1 bis R4, VR, CL) zur Energieversorgung und zur Erzeugung einer DC-Strom-/Spannungs-Kennlinie, die ein Referenzpotential (VR) und eine Entkopplungskapazität (CNF) aufweist,

mit einem schnellen Regelverstärker (SRV) zur Regelung des Stroms durch einen Stromfühlerwiderstand (RDL) und mit einer an Ausgangsklemmen (AN) zum Anschluß externer Baugruppen liegenden Pufferkapazität (CL), die über einen an der ersten Leitungsklemme (La) angeschlossenen Widerstand (RDL) gespeist wird,
**dadurch gekennzeichnet,**
daß die DC-Teilschaltung (RDL, CNF, ILD, ILR, R1 bis R4, VR, CL) eine der Pufferkapazität (CL) vorgeschaltete Stromwippenschaltung (SW) enthält und mit der AC-Teilschaltung (MOD, RM, RDL, R1 bis R4) im Regelkreis des schnellen Regelverstärkers (SRV) liegt, daß ein DC-Leitungsstromdetektor (ILD) die Spannung an der Entkopplungskapazität (CNF) erfaßt und einen DC-Leitungsstromregler (ILR) steuert, der ausgangsseitig mit dem Verbindungspunkt von Entkopplungskapazität (CNF) und erstem Eingang (-) des schnellen Regelverstärkers (SRV) verbunden ist,
daß der DC-Leitungsstromregler (ILR) ein Transkonduktanzverstärker ist, der von hoher Steilheit während der Einschaltphase der Schaltungsanordnung zu normaler Steilheit während der übrigen Betriebsphasen umschaltbar ist,
daß ein Eingang (-) des DC-Leitungsstromreglers (ILR) mit dem Referenzpotential (VR) und der andere Eingang (+) mit einem AC-Knotenpunkt (P1) verbunden ist, an dem der Ausgang des DC-Leitungsstromdetektors (ILD) und über je einen ohmschen Widerstand (R4, R3) das Referenzpotential (VR) und ein Teilerpunkt eines zwischen die Leitungsklemmen (La, Lb) geschalteten, aus dem Stromfühlerwiderstand (RDL) und weiteren Widerständen (R1, R2) gebildeten ohmschen Spannungsteilers liegt und daß die Steilheit des Transkonduktanzverstärkers (MOD) proportional zur reziproken AC-Impedanz (ZACA) der Sprechschaltungsanordnung ist.

2. Anordnung nach Anspruch 1,
**dadurch gekennzeichnet,** daß die Eingänge des schnellen Regelverstärkers (SRV) über einen Modulationswidertand (RM) und die Entkopplungskapazität (CNF) mit ·den Anschlüssen des Stromfühlerwiderstands (RDL) verbunden sind.

3. Anordnung nach Anspruch 1 bis 2,
**dadurch gekennzeichnet,** daß der Stromfühlerwiderstand (RDL) zwischen einer Leitungsklemme (La, Lb) und einem Speiseknotenpunkt (P2; Masse) liegt.

4. Anordnung nach Anspruch 1 bis 3,
**dadurch gekennzeichnet,** daß die Entkopplungskapazität (CNF) zwischen dem Speiseknotenpunkt (P2) und dem ersten Eingang (-) des schnellen Regelverstärkers (SRV) und der Modulationswiderstand (RM) zwischen der ersten Leitungsklemme (La) und dem zweiten Eingang (+) des schnellen Regelverstärkers (SRV) liegt.

5. Anordnung nach Anspruch 1 bis 4,
**dadurch gekennzeichnet,** daß der DC-Leitungsstromregler (ILR) ein Transkonduktanzverstärker mit variabler Steilheit ist.

6. Anordnung nach Anspruch 1 bis 5,
**dadurch gekennzeichnet,** daß die Modulatorschaltung (MOD, RM, R1 bis R4, RDL, MV, RS), (MOD, RM, R1 bis R4) einen Modulator (MOD) aufweist.

7. Anordnung nach Anspruch 1 bis 6,
**dadurch gekennzeichnet,** daß der Modulator (MOD) ein Transkonduktanzverstärker mit fest eingestellter Steilheit ist.

8. Anordnung nach Anspruch 1 bis 7,
**dadurch gekennzeichnet,** daß ein Eingang (+) des Modulators (MOD) mit dem AC-Knotenpunkt (P1), der andere Eingang (-) über einen Mikrofon-Vorverstärker (MV) mit Anschlußklemmen für ein Mikrofon (M) und daß ein Ausgang über einen Modulationswiderstand (RM) mit der ersten Leitungsklemme (La) verbunden ist.

9. Anordnung nach Anspruch 1 bis 8,
**dadurch gekennzeichnet,** daß der Mikrofon-Vorverstärker (MV) in seiner Verstärkung (SSI) steuerbar ist.

10. Anordnung nach Anspruch 1 bis 9,
**dadurch gekennzeichnet,** daß der Mikrofon-Vorverstärker (MV) ein Transkonduktanzverstärker mit variabel steuerbarer Steilheit ist.

11. Anordnung nach Anspruch 1 bis 10,
**dadurch gekennzeichnet,** daß der Ausgang des Mikrofon-Vorverstärkers (MV) einerseits mit dem anderen Eingang (-) des Modulators (MOD) und andererseits über einen Ausgangswiderstand (RS) mit dem Referenzpotential (VR) verbunden ist.

12. Anordnung nach Anspruch 1 bis 11,
**dadurch gekennzeichnet,** daß am Verbindungspunkt des einen Ausgangs des Modulators (MOD) und des Modulationswiderstandes (RM) der zweite Eingang ( + ) des schnellen Regelverstärkers (SRV) angeschlossen ist.

13. Anordnung nach Anspruch 1 bis 12,
**dadurch gekennzeichnet,** daß der Stromfühlerwiderstand (RDL) dem Widerstand entspricht, über den die Pufferkapazität (CL) gespeist wird.

14. Anordnung nach Anspruch 1 bis 13,
**dadurch gekennzeichnet,** daß die Pufferkapazität (CL) und die an ihr liegenden Ausgangsklemmen (AN, Bezugsklemme) mit der übrigen Schaltungsanordnung rückwirkungsfrei verbunden sind.

15. Anordnung nach Anspruch 1 bis 14,
**dadurch gekennzeichnet,** daß die Stromwippenschaltung (SW) an den Speiseknotenpunkt (P2) angeschlossen ist und einen elektronischen Schalter enthält, der ausgangsseitig zwischen einem Anschluß der Pufferkapazität (CL) und der zweiten Leitungsklemme (Lb) umschaltbar ist.

16. Anordnung nach Anspruch 1 bis 15,
**dadurch gekennzeichnet,** daß die Stromwippenschaltung (SW) zwei Schalttransistoren (T1, T2) eines Typs enthält, die mit je einem Ausgangsanschluß am Speiseknotenpunkt (P2) und mit dem anderen Ausgangsanschluß am einen Anschluß der Pufferkapazität (CL) bzw. an der zweiten Leitungsklemme (Lb, Masse) liegen.

17. Anordnung nach Anspruch 1 bis 16,
**dadurch gekennzeichnet,** daß die Schalttransistoren (T1, T2) von zwei Steuertransistoren (ST1, ST2) vom anderen Typ gesteuert werden, die mit ihren Ausgangskreisen in Reihe liegen, wobei ein Ausgangsanschluß des ersten Steuertransistors (STI) mit dem Speiseknotenpunkt (P2), ein Ausgangsanschluß des zweiten Steuertransistors (ST2) mit dem Steueranschluß eines Schalttransistors (T2) und der Verbindungspunkt der Ausgangskreise beider Steuertransistoren (ST1, ST2) mit dem Steueranschluß des anderen Schalttransistors (T1) verbunden ist und wobei der erste Steuertransistor (ST1) vom Teilerpunkt eines zwischen den Speiseknotenpunkt (P2) und den Ausgang des schnellen Regelverstärkers (SRV) geschalteten weiteren ohmschen Spannungsteilers (R5, R6) und der zweite Steuertransistor (ST2) vom Ausgang des schnellen Regelverstärkers (SRV) bzw. vom Fußpunkt des weiteren ohmschen Spannungsteilers (R5, R6) gesteuert wird.

18. Anordnung nach Anspruch 1 bis 17,
**dadurch gekennzeichnet,** daß der zweite Steuertransistor (ST2) den mit der zweiten Leitungsklemme (Lb) verbundenen Schalttransistor (T2) steuert und der zwischen den Steuereingängen der Steuertransitoren (ST1, ST2) liegende Widerstand (R6) des weiteren ohmschen Spannungsteilers (R5, R6) wertmäßig etwa einer Größenordnung kleiner als der Widerstand (R5) zwischen dem Steuereingang des ersten Steuertransistors (ST1) und dem Speiseknotenpunkt (P2) ist.

19. Anordnung nach Anspruch 1 bis 18,
**dadurch gekennzeichnet,** daß die zweite Leitungsklemme (Lb) mit einem Bezugspotential verbunden ist.

**Claims**

1. Electronic speech circuit arrangement, which can be connected to a telephone line via a first and second line terminal (La/Lb), having an AC circuit element (MOD, RM, RDL, R1 to R4) from a modulator circuit (MOD) for producing a line transmission current, having a DC circuit element (RDL, CNF, ILD, R1 to R4, VR, CL) for supplying power and for producing a DC current/voltage characteristic curve, which has a reference potential (VR) and a decoupling capacitor (CNF), having a fast control amplifier (SRV) for controlling the current through a current sensor resistor (RDL) and having a buffer capacitor (CL) at the output terminals (AN) for the connection of external assemblies, the buffer capacitor (CL) being fed via a resistor (RDL) connected to the first line terminal (La), characterised in that the DC circuit element (RDL, CNF, ILD, ILR, R1 to R4, VR, CL) contains a current balancing circuit (SW) connected in series in front of the buffer capacitor (CL) and, together with the AC circuit element (MOD, RM, RDL, R1 to R4) is located in the control loop of the fast control amplifier (SRV), in that a DC line current detector (ILD) detects the voltage across the decoupling capacitor (CNF) and controls a DC line current regulator (ILR), the output of which is connected to the junction of the decoupling capacitor (CNF) and the first input (-) of the fast control amplifier (SRV), in that the DC line current regulator (ILR) is a trans-conductance amplifier, which can be switched over from a steep slope during the switch-on phase of the circuit arrangement to a normal slope during the other operating phases, in that one input (-) of the DC line current regulator (ILR) is connected to the reference potential (VR) and the other input (+) is connected to an AC node point (P1) to which the output of the DC line current detector (ILD) is connected, as well as, in each case via a resistive resistor (R4, R3), the reference potential (VR) and a divider point of a resistive voltage divider, which is connected between the line terminals (La, Lb) and is formed by the current sensor resistor (RDL) and further resistors (R1, R2), and in that the slope of the transconductance amplifier (MOD) is proportional to the reciprocal AC impedance (ZACA) of the speech circuit arrangement.

2. Arrangement according to Claim 1, characterised in that the inputs to the fast control amplifier (SRV) are connected to the current sensor resistor (RDL) connections via a modulation resistor (RM) and the decoupling capacitor (DNF).

3. Arrangement according to Claims 1 to 2, characterised in that the current sensor resistor (RDL) is located between one line terminal (La, Lb) and a supply node point (P2; Earth).

4. Arrangement according to Claims 1 to 3, characterised in that the decoupling capacitor (CNF) is located between the supply node point (P2) and the first input (-) of the fast control amplifier (SRV) and the modulation resistor (RM) is located between the first line terminal (La) and the second input (+) of the fast control amplifier (SRV).

5. Arrangement according to Claims 1 to 4, characterised in that the DC line current regulator (ILR) is a trans-conductance amplifier with a variable slope.

6. Arrangement according to Claims 1 to 5, characterised in that the modulator circuit (MOD, RM, R1 to R4, RDL, MV, RS), (MOD, RM, R1 to R4) has a modulator (MOD).

7. Arrangement according to Claims 1 to 6, characterised in that the modulator (MOD) is a transconductance amplifier with a fixed slope setting.

8. Arrangement according to Claims 1 to 7, characterised in that one input (+) of the modulator (MOD) is connected to the AC node point (P1), the other input (-) is connected via a microphone pre-amplifier (MV) to the connecting terminals for a microphone (M) and that one output is connected via a modulation resistor (RM) to the first line terminal (La).

9. Arrangement according to Claims 1 to 8, characterized in that the gain (SSI) of the microphone preamplifier (MV) is controllable.

10. Arrangement according to Claims 1 to 9, characterized in that the microphone pre-amplifier (MV) is a trans-conductance amplifier with a variable controllable slope.

11. Arrangement according to Claims 1 to 10, characterised in that the output of the microphone preamplifier (MV) is connected on one side to the other input (-) of the modulator (MOD) and on the other side via an output resistor (RS) to the reference potential (VR).

12. Arrangement according to Claims 1 to 11, characterised in that the second input (+) of the fast control amplifier (SRV) is connected to the junction between the one output of the modulator (MOD) and the modulator resistor (RM).

13. Arrangement according to Claims 1 to 12, characterised in that the current sensor resistor (RDL) corresponds to the resistor, through which the buffer capacitor (CL) is fed.

14. Arrangement according to Claims 1 to 13, characterized in that buffer capacitor (CL) and the output terminals connected to it (AN, reference terminal) are connected to the rest of the circuit arrangement in a non-interacting manner.

15. Arrangement according to Claims 1 to 14, characterised in that the current balancing circuit (SW) is connected to the supply node point (P2) and contains an electronic switch, the output of which can be switched between one connection to the buffer capacitor (CL) and the second line terminal (Lb).

16. Arrangement according to Claims 1 to 15, characterised in that the current balancing circuit (SW) contains two switching transistors (T1, T2) of the same type, one output connection of each being located at the supply node point (P2) and the other output connection being located at a connection to the buffer capacitor (CL) and the second line terminal (Lb, Earth), respectively.

17. Arrangement according to Claims 1 to 16, characterised in that the switching transistors (T1, T2) are controlled by two control transistors (ST1, ST2) of a different type, whose output circuits are connected in series, one output connection of the first control transistor (ST1) being connected to the supply node point (P2), one output connection of the second control transistor (ST2) being connected to the control connection of a switching transistor (T2) and the junction of the output circuits of the two control transistors (ST1, ST2) being connected to the control connection of the other switching transistor (T1) and the first control transistor (ST1) being controlled from the divider point of a further resistive voltage divider (R5, R6) connected between the supply node point (P2) and the output of the fast control amplifier (SRV), and the second control transistor (ST2) being controlled from the output of the fast control amplifier (SRV) or the lower end of the further resistive voltage divider (R5, R6).

18. Arrangement according to Claims 1 to 17, characterised in that the second control transistor (ST2) controls the switching transistor (T2) connected to the second line terminal (Lb) and the resistor (R6) of the further resistive voltage divider (R5, R6) located between the control inputs to the control transistors (ST1, ST2) has a value approximately one order of magnitude less than the resistor (R5) between the control input to the first control transistor (ST1) and the supply node point (P2).

19. Arrangement according to Claims 1 to 18, characterised in that the second line terminal (Lb) is connected to a reference potential.

**Revendications**

1. Montage électronique de traitement des signaux vocaux, qui peut être raccordé par l'intermédiaire de première et seconde bornes de ligne (La/Lb) à une ligne téléphonique, et comportant un circuit partiel à courant alternatif (MOD,RM, RDL,R1 à R4) formé d'un circuit de modulation (MOD) servant à produire un courant d'émission de ligne,
un circuit partiel à courant continu (RDL,CNF,ILD,R1 à R4,VR, CL) servant à fournir l'alimentation en énergie et à produire une courbe caractéristique courant continu/tension et qui possède un potentiel de référence (VR) et une capacité de découplage (CNF),
un amplificateur de régulation rapide (SRV) servant à régler le courant traversant une résistance de détection de courant (RDL), et une capacité tampon (CL), qui est reliée à des bornes de sortie (AN) prévues pour le raccordement de modules extérieurs et est alimentée par l'intermédiaire d'une résistance (RDL) raccordée à la première borne de ligne (La), caractérisé par le fait
que le circuit partiel à courant continu (RDL,CNF,ILD,ILR,R1 à R4,VR,CL) comporte un circuit formant commutateur à bascule (SW), branché en amont de la capacité tampon (CL) et est disposé, ainsi que le circuit partiel à courant alternatif (MOD,RM,RDL,R1 à R4), dans le circuit de régulation de l'amplificateur de régulation rapide (SRV),
qu'un décodeur du courant continu de ligne (ILD) détecte la tension aux bornes de la capacité de découpage (CNF) et commande un régulateur (ILR) du courant continu de la ligne, qui est raccordé, côté sortie, au point de jonction de la capacité de découplage (C9) et de la première entrée (-) de l'amplificateur de régulation rapide (SRV),
que le régulateur (ILR) du courant continu de ligne est un amplificateur à transconductance, qui est commutable depuis une pente élevée, pendant la phase de branchement ou de montage, jusqu'à une pente normale pendant le reste des phases de fonctionnement,
qu'une entrée (-) du régulateur de contrôle d'une ligne (ILR) est raccordée au potentiel de référence (VR) et que l'autre entrée (+) est raccordée à un noeud à courant alternatif (P1), auquel est raccordée la sortie du détecteur (ILD) du courant continu de ligne et, par l'intermédiaire de résistances ohmiques respectives verticales (R3), le potentiel de référence (VR) et un point de division d'un diviseur ohmique de tension branché entre les bornes (La,Lb) de la ligne est formé par la résistance (RDL) de détection du courant et d'autres résistances (R1,R2), et
que la pente de l'amplificateur à transconductance (MOD) est proportionnelle à l'inverse de l'impédance en courant alternatif (ZACA) du montage de traitement de signaux vocaux.

2. Dispositif suivant la revendication 1, caractérisé par le fait que les entrées de l'amplificateur de régulation rapide (SRV) sont raccordées, par l'intermédiaire d'une résistance de modulation (RM) et de la capacité de découplage (CNF), aux bornes de la résistance de détection de courant (RDL).

3. Dispositif suivant les revendications 1 et 2, caractérisé par le fait que la résistance de détection de courant (RD) est branchée entre une borne de ligne (La,Lb) et un noeud d'alimentation (P2;Masse).

4. Montage suivant l'une des revendications 1 à 3, caractérisé par le fait que la capacité de découplage (CNF) est branchée entre le noeud d'alimentation (P2) et la première entrée (-) de l'amplificateur de régulation rapide (SRV), que la résistance de modulation (RM) est branchée entre la première borne de ligne (La) et la seconde borne (+) de l'amplificateur de régulation rapide (SRV).

5. Dispositif suivant les revendications 1 à 4, caractérisé par le fait que le régulateur (ILR) du courant continu de ligne est un amplificateur à transconductance possédant une pente variable.

6. Dispositif suivant les revendications 1 à 5, caractérisé par le fait que le circuit de modulation (MOD,RM, R1 à R4,RDL,MV,RS), (MOD,RM,R1 à R4) comporte un modulateur (MOD).

7. Dispositif suivant les revendications 1 à 6, caractérisé par le fait que le modulateur (MOD) est un amplificateur à transconductance possédant une porte réglée de façon fixe.

8. Montage suivant les revendications 1 à 7, caractérisé par le fait qu'une entrée (+) du modulateur (MOD) est raccordée au noeud à courant alternatif (P1), que l'autre entrée (-) est raccordée par l'intermédiaire d'un préamplificateur (MV) pour un microphone (M), aux bornes de raccordement de ce dernier, et qu'une sortie est raccordée par l'intermédiaire d'une résistance de modulation (RM) à la première borne de ligne (La).

9. Dispositif suivant les revendications 1 à 8, caractérisé par le fait que l'amplification (SSI) du préamplificateur (MV) du microphone est commandable.

10. Dispositif suivant les revendications 1 à 9, caractérisé par le fait que le préamplificateur (MV) du microphone est un amplificateur à transconductance possédant une pente commandable d'une manière variable.

11. Dispositif suivant les revendications 1 à 10, caractérisé par le fait que la sortie du préamplificateur (MV) du microphone est raccordée d'une part à l'autre entrée (-) du modulateur (MOD) et d'autre part, au moyen d'une résistance de sortie (RS), au potentiel de référence (VR).

12. Dispositif suivant les revendications 1 à 11, caractérisé par le fait que la seconde entrée (+) de l'amplificateur de régulation rapide (SRV) est raccordée au point de jonction d'une partie du modulateur (MOD) et de la résistance de modulation (RM).

13. Dispositif suivant les revendications 1 à 12, caractérisé par le fait que la résistance de détection de courant (RDL) correspond à la résistance par l'intermédiaire de laquelle est alimentée la capacité tampon (CL).

14. Dispositif suivant les revendications 1 à 13, caractérisé par le fait que la capacité tampon (CL) et les bornes de sortie (AN, borne de référence), qui lui sont raccordées, sont reliées sans réaction au reste du montage.

15. Dispositif suivant les revendications 1 à 14, caractérisé par le fait que le circuit formant commutateur à bascule (SV) est raccordé au noeud d'alimentation (P2) et comporte un commutateur électronique qui peut être commuté, côté sortie, entre une borne de la capacité tampon (CL) et la seconde borne de ligne (Lb).

16. Montage suivant les revendications 1 à 15, caractérisé par le fait que le circuit formant commutateur de courant (SW) comporte deux transistors de commutation (T1,T2) d'un type, qui sont raccordés respectivement par une borne de sortie au noeud d'alimentation (P2) et par l'autre borne de sortie à une zone de la capacité tampon (CL) ou à la seconde borne de ligne (Lb, masse).

17. Dispositif suivant les revendications 1 à 16, caractérisé par le fait que les transistors de commutation (T1,T2) sont commandés par deux transistors de commande (ST1, ST2) de l'autre type, qui sont branchés en série par leurs circuits de sortie, une borne de sortie du premier transistor de commande (ST1) étant raccordée au noeud d'alimentation (P2), une borne de sortie du second transistor de commande (ST2) à la borne de commande d'un transistor de commutation (T2) et le point de jonction des circuits de sortie des deux transistors (ST1,ST2) à la borne de commande de l'autre transistor de commutation (T1), alors que le premier transistor de commande (ST1) est commandé par le point de division d'un autre diviseur ohmique de tension (R5,R6), branché entre le noeud d'alimentation (P2) et la sortie de l'amplificateur de régulation rapide (SRV), et que le second transistor de commande (ST2) est commandé par la sortie de l'amplificateur de régulation rapide (SRV) ou par le point de base de l'autre diviseur ohmique de tension (R5,R6).

**18.** Dispositif suivant les revendications 1 à 17, caractérisé par le fait que le second transistor de commande (ST2) commande le transistor de commutation (T2) raccordé à la seconde borne de ligne (Lb) et que la résistance (R6), qui est située entre les entrées de commande des transistors de commande (ST1,ST2), de l'autre diviseur ohmique de transmission (R5,R6) possède une valeur approximativement inférieure d'un ordre de grandeur à celle de la résistance (R5) située entre la borne de commande du premier transistor de commande (ST1) et le noeud d'alimentation (P2).

**19.** Dispositif suivant les revendications 1 à 18, caractérisé par le fait que la seconde borne de ligne (Lb) est raccordée à un potentiel de référence.

# FIG 1

# FIG 2